# EUROPEAN PATENT APPLICATION

(11) **EP 2 325 241 A1**
(43) Date of publication of application: **25.05.2011**
(21) Application number: 10192141.9
(22) Date of filing: 23.11.2010
(51) Int. Cl.: C08K 3/00, C08L 15/00

(54) **Pneumatic tire**

(30) Priority: 24.11.2009 US 624945
(71) Applicant: The Goodyear Tire & Rubber Company, Akron, OH 44316-0001 (US)
(72) Inventor: Costantini, Nicola, L-1260, Luxembourg (LU); Thielen, Georges Marcel Victor, L-4995, Schouweiler (LU); Schmitz, Frank, L-7782, Bissen (LU); Klinkenberg, Maurice Peter Catharina Jozef, L-9188, Vichten (LU); Bates, Kenneth Allen, Brunswick, OH 44212 (US); Fourgon, Fernand Antoine Joseph, B-6600, Bastogne (BE)
(74) Representative: Kutsch, Bernd

(57) **Abstract**

The present invention is directed to a pneumatic tire comprising a ground contacting tread, the tread comprising a rubber composition comprising from 60 to 90 phr of a functionalized solution polymerized styrene-butadiene rubber having a bound styrene content of at least 36 percent by weight, a vinyl 1,2 content of less than 25 percent by weight, and functionalized with an alkoxysilane group and a thiol group; from 40 to 10 phr of polybutadiene; and from 50 to 150 phr of silica.

## Description

### Background of the Invention

It is highly desirable for tires to have good wet skid resistance, low rolling resistance, and good wear characteristics. It has traditionally been very difficult to improve a tire's wear characteristics without sacrificing its wet skid resistance and traction characteristics. These properties depend, to a great extent, on the dynamic viscoclastic properties of the rubbers utilized in making the tire.

In order to reduce the rolling resistance and to improve the treadwear characteristics of tires, rubbers having a high rebound have traditionally been utilized in making tire tread rubber compounds. On the other hand, in order to increase the wet skid resistance of a tire, rubbers which undergo a large energy loss, or hysteresis, have generally been utilized in the tire's tread. In order to balance these two viscoelastically inconsistent properties, mixtures of various types of synthetic and natural rubber are normally utilized in tire treads. For instance, various mixtures of styrene-butadiene rubber and polybutadiene rubber are commonly used as a rubbery material for automobile tire treads.

### Summary of the Invention

The present invention is directed to a tire in accordance with claim 1. Dependent claims refer to preferred embodiments of the invention.

### Detailed Description of the Invention

There is disclosed a pneumatic tire comprising a ground contacting tread, the tread comprising a rubber composition, the rubber composition comprising from 60 to 90 phr of a solution polymerized styrene-butadiene rubber having a bound styrene content of at least 36 percent by weight, a vinyl 1,2 content of less than 25 percent by weight, and functionalized with an alkoxysilane group and a thiol group; from 40 to 10 phr of a preferably high-cis polybutadiene; and from 50 to 150 phr of silica.

In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art.

The rubber composition includes from 60 to 90 phr of a functionalized styrene-butadiene rubber having a bound styrene content of greater than 36 percent by weight and a vinyl 1, 2 content of less than 25 percent. Suitable styrene-butadiene rubber includes emulsion and/or solution polymerization derived styrene/butadiene rubbers. In one embodiment, the rubber composition includes from 70 to 80 phr of a styrene-butadiene rubber having a bound styrene content of greater than 36 percent by weight.

In one embodiment, the functionalized styrene-butadiene rubber has a bound styrene content of greater than 40 percent by weight.

The functionalized styrene-butadiene rubber having a bound styrene content of greater than 36 percent by weight is also functionalized with an alkoxysilane group and a thiol group. In one embodiment, the styrene-butadiene rubber is obtained by copolymerizing styrene and butadiene, and characterized in that the styrene-butadiene rubber has a thiol group and an alkoxysilyl group which are bonded to the polymer chain. In one embodiment, the alkoxysilyl group may be at least one of methoxysilyl group and ethoxysilyl group.

The thiol group may be bonded to any of a polymerization initiating terminal, a polymerization terminating terminal, a main chain of the styrene-butadiene rubber and a side chain, as long as it is bonded to the styrene-butadiene rubber chain. However, the primary amino group and/or thiol group is preferably introduced to the polymerization initiating terminal or the polymerization terminating terminal, in that the disappearance of energy at a polymer terminal is inhibited to improve hysteresis loss characteristics.

Further, the content of the alkoxysilyl group bonded to the polymer chain of the (co)polymer rubber is preferably from 0.5 to 200 mmol/kg of (styrene-butadiene rubber. The content is more preferably from 1 to 100 mmol/kg of styrene-butadiene rubber, and particularly preferably from 2 to 50 mmol/kg of styrene-butadiene rubber.

The alkoxysilyl group may be bonded to any of the polymerization initiating terminal, the polymerization terminating terminal, the main chain of the (co)polymer and the side chain, as long as it is bonded to the (co)polymer chain. However, the alkoxysilyl group is preferably introduced to the polymerization initiating terminal or the polymerization terminating terminal, in that the disappearance of energy is inhibited from the (co)polymer terminal to be able to improve hysteresis loss characteristics.

The styrene-butadiene rubber can be produced by polymerizing styrene and butadiene in a hydrocarbon solvent by anionic polymerization using an organic alkali metal and/or an organic alkali earth metal as an initiator, adding a terminating agent compound having a thiol group protected with a protecting group and an alkoxysilyl group to react it with a living polymer chain terminal at the time when the polymerization has substantially completed, and then conducting deblocking, for example, by hydrolysis or other appropriate procedure. In one embodiment, the styrene-butadiene rubber can be produced as disclosed in WO-A- 2007/047943.

In one embodiment, the solution polymerized styrene-butadiene rubber is as disclosed in WO-A- 2007/047943 and is functionalized with an alkoxysilane group and a thiol, and comprises the reaction product of a living anionic polymer and a silane-sulfide modifier represented by the formula I

(R⁴O)ₓR⁴_{y}Si-R⁵-S-SiR⁴₃ I

wherein Si is silicon; S is sulfur; O is oxygen; x is an integer selected from 1, 2 and 3; y is an integer selected from 0, 1, and 2; x+y=3; R⁴ is the same or different and is (C₁-C₁₆) alkyl; and R⁵ is aryl, and alkyl aryl, or (C₁-C₁₆) alkyl. In one embodiment, R⁵ is a (C₁-C₁₆) alkyl. In one embodiment, each R⁴ group is the same or different, and each is independently a C₁-C₅ alkyl, and R⁵ is C₁-C₅ alkyl.

Suitable styrene-butadiene rubbers functionalized with an alkoxysilane group and a thiol group include a developmental functionalized SBR from Dow Olefinverbund GmbH which is of the type of silane/thiol functionalized SBR described in WO-A- 2007/047943.

The rubber composition also includes from 40 to 10 phr of a cis 1,4 polybutadiene rubber. In one embodiment the rubber composition includes from 30 to 20 phr of a cis 1,4 polybutadiene.

In one embodiment, high cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

A reference to glass transition temperature, or Tg, of an elastomer or elastomer composition, where referred to herein, represents the glass transition temperature(s) of the respective elastomer or elastomer composition in its uncured state or possibly a cured state in a case of an elastomer composition. A Tg can be suitably determined as a peak midpoint by a differential scanning calorimeter (DSC) at a temperature rate of increase of 10ºC per minute.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition includes from 50 to 150 phr of silica. In another embodiment, from 60 to 120 phr of silica may be used.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

Various commercially available silicas may be used, such as, only for example herein, and without limitation, silicas commercially available from PPG Industries under the Hi-Sil trademark with designations 210 and 243; silicas available from Rhodia, with, for example, designations of Z1165MP and Z165GR and silicas available from Degussa AG with, for example, designations VN2 and VN3.

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including particulate fillers including ultra high molecular weight polyethylene (UHMWPE), crosslinked particulate polymer gels and plasticized starch composite fillers. Such other fillers may be used in an amount ranging from 1 to 30 phr.

In one embodiment the rubber composition may contain a conventional sulfur containing organosilicon compound. Examples of suitable sulfur containing organosilicon compounds are of the formula II:

Z-AlK-Sₙ-Alk-Z II

in which Z is selected from the group consisting of 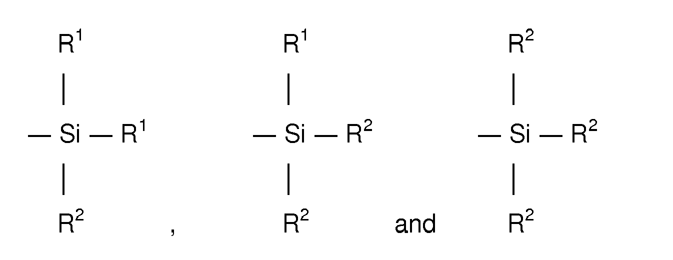 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula II, Z may be 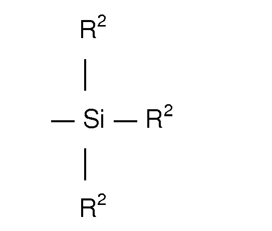 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-B- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr. Typical amounts of tackifier resins, if used, comprise 0.5 to 10 phr. Typical amounts of processing aids comprise 1 to 50 phr. Typical amounts of antioxidants comprise 1 to 5 phr. Representative antioxidants may be, for example, diphenyl-p-phenylenediamine. Typical amounts of antiozonants comprise 1 to 5 phr. Typical amounts of fatty acids, if used, which can include stearic acid comprise 0.5 to 3 phr. Typical amounts of waxes comprise 1 to 5 phr. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. Preferably, the rubber component is a tread (including tread cap and tread base).

The pneumatic tire of the present invention may be a race tire, passenger tire, aircraft tire, agricultural, earthmover, off-the-road or truck tire. Preferably, the tire is a passenger or truck tire. The tire may also be a radial or a bias tire.

Vulcanization of the pneumatic tire of the present invention is generally carried out at conventional temperatures ranging from 100°C to 200°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following example.

### Example 1

In this example, the effect of a high styrene, functionalized styrene-butadiene rubber on the abrasion resistance of a rubber compound is illustrated.

A series of sixteen rubber compounds were prepared, with recipes as given in Tables 1, 3, 5 and 7. In a first group of compounds, Samples 1 through 4, the samples contained styrene butadiene rubber (SBR) and polybutadiene (BR) in a SBR/BR ratio of 50/50 as shown in Table 1. In a second group of compounds, Samples 5 through 8, the samples contained styrene butadiene rubber (SBR) and polybutadiene (BR) in a SBR/BR ratio of 70/30, as shown in Table 2. In a third group of compounds, Samples 9 through 12, the samples contained styrene butadiene rubber (SBR) and polybutadiene (BR) in a SBR/BR ratio of 90/10, as shown in Table 3. In a fourth group of compounds, Samples 13 through 16, the samples contained styrene butadiene rubber (SBR) and polybutadiene (BR) in a SBR/BR ratio of 90/10 and a higher silica content of 120 phr, as shown in Table 4. In each group of compounds, each sample contained a different SBR, including a medium styrene content, non functionalized SBR; a high styrene content, non functionalized SBR; a high styrene content, functionalized SBR; and a medium styrene content, functionalized SBR.

Samples were compounded and cured, followed by testing for several physical properties with values given in Tables 2, 4, 6 and 8.

**Table 1**

| Sample No. | 1 | 2 | 3 | 4 |
|---|---|---|---|---|
| Non-Productive Mix Step | | | | |
| Polybutadiene | 50 | 50 | 50 | 50 |
| Med Styrene SBR¹ | 68.75 | 0 | 0 | 0 |
| High Styrene SBR² | 0 | 68.75 | 0 | 0 |
| High Styrene SBR functionalized³ | 0 | 0 | 50 | 0 |
| Med Styrene SBR functionalized⁴ | 0 | 0 | 0 | 50 |
| Process Oil | 16.25 | 16.25 | 35 | 35 |
| Silica | 90 | 90 | 90 | 90 |
| Silane Coupling Agent | 7.2 | 7.2 | 7.2 | 7.2 |
| | | | | |

| Productive Mix Step | | | | |
|---|---|---|---|---|
| Zinc Oxide | 2.5 | 2.5 | 2.5 | 2.5 |
| Sulfur | 1.9 | 1.9 | 1.9 | 1.9 |
| Accelerators | 4.5 | 4.5 | 4.5 | 4.5 |

| | | | | |
|---|---|---|---|---|
| ¹ SE SLR 4630, medium styrene content solution polymerized styrene-butadiene rubber containing approximately 25 percent by weight of bound styrene based on the total polymer weight, and 47.3 percent by weight of 1,2 vinyl based on the total polymer weight, and 63 percent by weight of 1,2 vinyl based on total butadiene units; extended with 37.5 phr oil; from The Dow Chemical Company. ² SE SLR 6430, high styrene content solution polymerized styrene-butadiene rubber containing approximately 40 percent by weight of bound styrene based on the total polymer weight, 15.3 percent by weight of 1,2 vinyl based on the total polymer weight, and 25.5 percent by weight of 1,2 vinyl based on total butadiene units; extended with 37.5 phr oil; from The Dow Chemical Company. ³ High styrene content solution polymerized styrene-butadiene rubber containing approximately 45 percent by weight of styrene based on the total polymer weight, 5 percent by weight of 1,2 vinyl based on the total polymer weight, and 9 percent by weight of 1,2 vinyl based on total butadiene units; functionalized with alkoxysilane and thiol groups, a developmental functionalized SBR obtained from Dow Olefinverbund GmbH which is of the type of silane/thiol functionalized SBR described in WO-A- 2007/047943. ⁴ Medium styrene content solution polymerized styrene-butadiene rubber containing approximately 21 percent by weight of styrene based on the total polymer weight, 50 percent by weight of 1,2 vinyl based on the total polymer weight, and 63 percent by weight of 1,2 vinyl based on the total butadiene units; functionalized with alkoxysilane and thiol groups, a developmental functionalized SBR obtained from Dow Olefinverbund GmbH which is of the type of silane/thiol functionalized SBR described in WO-A- 2007/047943. | | | | |

**Table 2**

| Sample No. | 1 | 2 | 3 | 4 |
|---|---|---|---|---|
| | | | | |

| Physical Properties | | | | |
|---|---|---|---|---|
| Rebound 0°C | 22.8 | 20.5 | 15.6 | 25.2 |
| Rebound 23°C | 41.7 | 39.5 | 35.2 | 45.8 |
| Rebound 100°C | 63.9 | 61.6 | 60.6 | 67.1 |
| Shore A | 64 | 68 | 69 | 65 |
| Mooney Viscosity | 45 | 48 | 39 | 47 |
| | | | | |

| RPA2000¹ | | | | |
|---|---|---|---|---|
| G' 15% (0.83 Hz) uncured, MPa | 0.23 | 0.29 | 0.23 | 0.23 |
| G' 1 %, MPa | 2.6 | 3.4 | 3.3 | 2.5 |
| G' 50 %, MPa | 1.10 | 1.24 | 1.22 | 1.19 |
| G" 10 %, MPa | 0.19 | 0.25 | 0.26 | 0.17 |
| Tan Delta 10 % | 0.104 | 0.116 | 0.121 | 0.092 |
| | | | | |

| DIN Abrasion² cured 14 mins @ 160°C | | | | |
|---|---|---|---|---|
| Abrasion loss, mm³ | 80 | 72 | 69 | 70 |
| | | | | |

| Cold Tensile³ | | | | |
|---|---|---|---|---|
| Elongation at break, % | 476 | 521 | 512 | 435 |
| True Tensile, MPa | 115 | 138 | 134 | 105 |
| Mod 100%, MPa | 2.1 | 2.3 | 2.5 | 2.3 |
| Mod 300%, MPa | 10.2 | 10.8 | 11.2 | 11.3 |
| Tensile Strength, MPa | 20.0 | 22.2 | 21.8 | 19.6 |
| | | | | |

| Viscoelastic Strain⁴ | | | | |
|---|---|---|---|---|
| G' (1% 50°C) MPa | 3.4 | 4.9 | 4.3 | 2.4 |
| Tan delta (1.5%, 50°C) | 0.162 | 0.185 | 0.186 | 0.134 |
| Tan delta (1.5% 0°C) | 0.357 | 0.342 | 0.412 | 0.309 |
| Tan delta (3%, 0ºC) | 0.399 | 0.401 | 0.457 | 0.338 |

| | | | | |
|---|---|---|---|---|
| ¹The samples were tested for viscoelastic properties using RPA. "RPA" refers to a Rubber Process Analyzer as RPA 2000.TM. instrument by Alpha Technologies, formerly the Flexsys Company and formerly the Monsanto Company. References to an RPA 2000 instrument may be found in the following publications: H. A. Palowski, et al, Rubber World, June 1992 and January 1997, as well as Rubber & Plastics News, Apr. 26 and May 10, 1993. ²DIN abrasion (in terms of relative volume loss compared to a control) according to DIN 53516. ³Cold tensile properties of the cured compounds were measured following DIN 53504 at a test temperature of 23ºC. ⁴Viscoelastic properties were measured using a Metravib strain sweep viscoanalyzer using a test temperature of 30ºC and a frequency of 7.8 Hz. | | | | |

**Table 3**

| Sample No. | 5 | 6 | 7 | 8 |
|---|---|---|---|---|
| | | | | |

| Non-Productive Mix Step | | | | |
|---|---|---|---|---|
| Polybutadiene | 30 | 30 | 30 | 30 |
| Med Styrene SBR¹ | 96.25 | 0 | 0 | 0 |
| High Styrene SBR² | 0 | 96.25 | 0 | 0 |
| High Styrene SBR functionalized³ | 0 | 0 | 70 | 0 |
| Med Styrene SBR functionalized⁴ | 0 | 0 | 0 | 70 |
| Process Oil | 8.75 | 8.75 | 35 | 35 |
| Silica | 90 | 90 | 90 | 90 |
| Silane Coupling Agent | 7.2 | 7.2 | 7.2 | 7.2 |

| | | | | |
|---|---|---|---|---|
| Productive Mix Step | | | | |
| Zinc Oxide | 2.5 | 2.5 | 2.5 | 2.5 |
| Sulfur | 1.9 | 1.9 | 1.9 | 1.9 |
| Accelerators | 4.5 | 4.5 | 4.5 | 4.5 |

| | | | | |
|---|---|---|---|---|
| ¹ SE SLR 4630, medium styrene content solution polymerized styrene-butadiene rubber containing approximately 25 percent by weight of bound styrene based on the total polymer weight, and 47.3 percent by weight of 1,2 vinyl based on the total polymer weight, and 63 percent by weight of 1,2 vinyl based on total butadiene units; extended with 37.5 phr oil; from The Dow Chemical Company. ² SE SLR 6430, high styrene content solution polymerized styrene-butadiene rubber containing approximately 40 percent by weight of bound styrene based on the total polymer weight, 15.3 percent by weight of 1,2 vinyl based on the total polymer weight, and 25.5 percent by weight of 1,2 vinyl based on total butadiene units; extended with 37.5 phr oil; from The Dow Chemical Company. ³ High styrene content solution polymerized styrene-butadiene rubber containing approximately 45 percent by weight of styrene based on the total polymer weight, 5 percent by weight of 1,2 vinyl based on the total polymer weight, and 9 percent by weight of 1,2 vinyl based on total butadiene units; functionalized with alkoxysilane and thiol groups, a developmental functionalized SBR obtained from Dow Olefinverbund GmbH which is of the type of silane/thiol functionalized SBR described in WO-A- 2007/047943. ⁴ Medium styrene content solution polymerized styrene-butadiene rubber containing approximately 21 percent by weight of styrene based on the total polymer weight, 50 percent by weight of 1,2 vinyl based on the total polymer weight, and 63 percent by weight of 1,2 vinyl based on the total butadiene units; functionalized with alkoxysilane and thiol groups, a developmental functionalized SBR obtained from Dow Olefinverbund GmbH which is of the type of silane/thiol functionalized SBR described in W02007/047943. | | | | |

**Table 4**

| Physical Properties | | | | |
|---|---|---|---|---|
| Rebound 0°C | 12.9 | 14.5 | 10.8 | 15.0 |
| Rebound 23°C | 35.7 | 36.1 | 32.0 | 41.3 |
| Rebound 100°C | 65.1 | 60.9 | 62.7 | 68.7 |
| Shore A | 65 | 70 | 69 | 63 |
| Mooney Viscosity | 46 | 54 | 42 | 50 |
| | | | | |

| RPA¹ | | | | |
|---|---|---|---|---|
| G' 15% (0.83 Hz) uncured | 0.26 | 0.36 | 0.26 | 0.26 |
| G' 1 %, MPa | 2.3 | 3.6 | 3.1 | 2.2 |
| G' 50 %, MPa | 1.03 | 1.31 | 1.24 | 1.15 |
| G" 10%, MPa | 0.16 | 0.27 | 0.23 | 0.14 |
| Tan Delta 10 % | 0.099 | 0.117 | 0.113 | 0.084 |
| | | | | |

| DIN Abrasion² cured 14 mins @160°C | | | | |
|---|---|---|---|---|
| Abrasion loss, mm³ | 102 | 91 | 81 | 86 |
| | | | | |

| Cold Tensile³ | | | | |
|---|---|---|---|---|
| Elongation at break, % | 446 | 522 | 477 | 388 |
| True Tensile. MPa | 110 | 151 | 130 | 97 |
| Mod 100%, MPa | 2.3 | 2.5 | 2.7 | 2.5 |
| Mod 300%, MPa | 11.6 | 12.0 | 12.9 | 13.7 |
| Tensile Strength. MPa | 20.2 | 24.3 | 22.5 | 19.8 |
| | | | | |

| Viscoelastic Strain⁴ | | | | |
|---|---|---|---|---|
| G' (1% 50°C), MPa | 3.0 | 5.2 | 3.8 | 2.0 |
| Tan delta (1.5%, 50°C) | 0.159 | 0.177 | 0.173 | 0.118 |
| Tan delta (1.5% 0°C) | 0.462 | 0.375 | 0.483 | 0.404 |
| Tan delta (3%, 0ºC) | 0.519 | 0.462 | 0.553 | 0.44 |

| | | | | |
|---|---|---|---|---|
| ¹The samples were tested for viscoelastic properties using RPA. "RPA" refers to a Rubber Process Analyzer as RPA 2000.TM. instrument by Alpha Technologies, formerly the Flexsys Company and formerly the Monsanto Company. References to an RPA 2000 instrument may be found in the following publications: H. A. Palowski, et al, Rubber World, June 1992 and January 1997, as well as Rubber & Plastics News, Apr. 26 and May 10, 1993. ²DIN abrasion (in terms of relative volume loss compared to a control) according to DIN 53516. ³Cold tensile properties of the cured compounds were measured following DIN 53504 at a test temperature of 23ºC. ⁴Viscoelastic properties were measured using a Metravib strain sweep viscoanalyzer using a test temperature of 30ºC and a frequency of 7.8 Hz. | | | | |

**Table 5**

| Sample No. | 9 | 10 | 11 | 12 |
|---|---|---|---|---|
| | | | | |

| Non-Productive Mix Step | | | | |
|---|---|---|---|---|
| Polybutadiene | 10 | 10 | 10 | 10 |
| Med Styrene SBR¹ | 123.75 | 0 | 0 | 0 |
| High Styrene SBR² | 0 | 123.75 | 0 | 0 |
| High Styrene SBR functionalized³ | 0 | 0 | 90 | 0 |
| Med Styrene SBR functionalized⁴ | 0 | 0 | 0 | 90 |
| Process Oil | 1.25 | 1.25 | 35 | 35 |
| Silica | 90 | 90 | 90 | 90 |
| Silane Coupling Agent | 7.2 | 7.2 | 7.2 | 7.2 |

| | | | | |
|---|---|---|---|---|
| Productive Mix Step | | | | |
| Zinc Oxide | 2.5 | 2.5 | 2.5 | 2.5 |
| Sulfur | 1.9 | 1.9 | 1.9 | 1.9 |
| Accelerators | 4.5 | 4.5 | 4.5 | 4.5 |

| | | | | |
|---|---|---|---|---|
| ¹ SE SLR 4630, medium styrene content solution polymerized styrene-butadiene rubber containing approximately 25 percent by weight of bound styrene based on the total polymer weight, and 47.3 percent by weight of 1,2 vinyl based on the total polymer weight, and 63 percent by weight of 1,2 vinyl based on total butadiene units; extended with 37.5 phr oil; from The Dow Chemical Company. ² SE SLR 6430, high styrene content solution polymerized styrene-butadiene rubber containing approximately 40 percent by weight of bound styrene based on the total polymer weight, 15.3 percent by weight of 1,2 vinyl based on the total polymer weight, and 25.5 percent by weight of 1,2 vinyl based on total butadiene units; extended with 37.5 phr oil; from The Dow Chemical Company. ³ High styrene content solution polymerized styrene-butadiene rubber containing approximately 45 percent by weight of styrene based on the total polymer weight, 5 percent by weight of 1,2 vinyl based on the total polymer weight, and 9 percent by weight of 1,2 vinyl based on total butadiene units; functionalized with alkoxysilane and thiol groups, a developmental functionalized SBR obtained from Dow Olefinverbund GmbH which is of the type of silane/thiol functionalized SBR described in WO-A- 2007/047943. ⁴ Medium styrene content solution polymerized styrene-butadiene rubber containing approximately 21 percent by weight of styrene based on the total polymer weight, 50 percent by weight of 1,2 vinyl based on the total polymer weight, and 63 percent by weight of 1,2 vinyl based on the total butadiene units; functionalized with alkoxysilane and thiol groups, a developmental functionalized SBR obtained from Dow Olefinverbund GmbH which is of the type of silane/thiol functionalized SBR described in WO-A- 2007/047943. | | | | |

**Table 6**

| Physical Properties | | | | |
|---|---|---|---|---|
| Rebound 0°C | 6.6 | 10.5 | 8.3 | 7.5 |
| Rebound 23°C | 26.2 | 30.4 | 28.1 | 31.2 |
| Rebound 100°C | 63.8 | 62.5 | 65.0 | 66.4 |
| Shore A | 64 | 70 | 70 | 64 |
| Mooney Viscosity | 51 | 59 | 46 | 52 |

| | | | | |
|---|---|---|---|---|
| RPA¹ | | | | |
| G' 15% (0.83 Hz) uncured, MPa | 0.30 | 0.41 | 0.27 | 0.29 |
| G' 1 %, MPa | 2.2 | 3.5 | 2.9 | 2.1 |
| G' 50 %, MPa | 0.99 | 1.28 | 1.24 | 1.11 |
| G" 10 %, MPa | 0.15 | 0.25 | 0.21 | 0.14 |
| Tan Delta 10 % | 0.098 | 0.114 | 0.106 | 0.089 |

| DIN Abrasion² 14 mins @160°C | | | | |
|---|---|---|---|---|
| Abrasion loss, mm³ | 125 | 107 | 95 | 106 |
| | | | | |

| Cold Tensile³ | | | | |
|---|---|---|---|---|
| Elongation at break, % | 433 | 474 | 455 | 376 |
| True Tensile, MPa | 113 | 138 | 130 | 91 |
| Mod 100%, MPa | 2.6 | 2.7 | 2.8 | 2.7 |
| Mod 300%, MPa | 13.1 | 13.4 | 14.3 | 14.1 |
| Tensile Strength, MPa | 21.3 | 23.8 | 23.4 | 19.0 |
| | | | | |

| Viscoelastic Strain⁴ | | | | |
|---|---|---|---|---|
| G' (1 % 50 °C), MPa | 3.0 | 4.8 | 3.3 | 1.7 |
| Tan delta (1.5%, 50°C) | 0.161 | 0.17 | 0.153 | 0.108 |
| Tan delta (1.5% 0°C) | 0.673 | 0.453 | 0.571 | 0.621 |
| Tan delta (3%, 0ºC) | 0.771 | 0.567 | 0.645 | 0.66 |

| | | | | |
|---|---|---|---|---|
| ¹The samples were tested for viscoelastic properties using RPA. "RPA" refers to a Rubber Process Analyzer as RPA 2000.TM. instrument by Alpha Technologies, formerly the Flexsys Company and formerly the Monsanto Company. References to an RPA 2000 instrument may be found in the following publications: H. A. Palowski, et al, Rubber World, June 1992 and January 1997, as well as Rubber & Plastics News, Apr. 26 and May 10, 1993. ²DIN abrasion (in terms of relative volume loss compared to a control) according to DIN 53516. ³Cold tensile properties of the cured compounds were measured following DIN 53504 at a test temperature of 23ºC. ⁴Viscoelastic properties were measured using a Metravib strain sweep viscoanalyzer using a test temperature of 30ºC and a frequency of 7.8 Hz. | | | | |

**Table 7**

| Sample No. | 13 | 14 | 15 | 16 |
|---|---|---|---|---|
| | | | | |

| Non-Productive Mix Step | | | | |
|---|---|---|---|---|
| Polybutadiene | 10 | 10 | 10 | 10 |
| Med Styrene SBR¹ | 123.75 | 0 | 0 | 0 |
| High Styrene SBR² | 0 | 123.75 | 0 | 0 |
| High Styrene SBR functionalized³ | 0 | 0 | 90 | 0 |
| Med Styrene SBR functionalized⁴ | 0 | 0 | 0 | 90 |
| Process Oil | 21.25 | 21.25 | 55 | 55 |
| Silica | 120 | 120 | 120 | 120 |
| Silane Coupling Agent | 9.6 | 9.6 | 9.6 | 9.6 |
| | | | | |

| Productive Mix Step | | | | |
|---|---|---|---|---|
| Zinc Oxide | 2.5 | 2.5 | 2.5 | 2.5 |
| Sulfur | 1.9 | 1.9 | 1.9 | 1.9 |
| Accelerators | 4.5 | 4.5 | 4.5 | 4.5 |

| | | | | |
|---|---|---|---|---|
| ¹ SE SLR 4630, medium styrene content solution polymerized styrene-butadiene rubber containing approximately 25 percent by weight of bound styrene based on the total polymer weight, and 47.3 percent by weight of 1,2 vinyl based on the total polymer weight, and 63 percent by weight of 1,2 vinyl based on total butadiene units; extended with 37.5 phr oil; from The Dow Chemical Company. ² SE SLR 6430, high styrene content solution polymerized styrene-butadiene rubber containing approximately 40 percent by weight of bound styrene based on the total polymer weight, 15.3 percent by weight of 1,2 vinyl based on the total polymer weight, and 25.5 percent by weight of 1,2 vinyl based on total butadiene units; extended with 37.5 phr oil; from The Dow Chemical Company. ³ High styrene content solution polymerized styrene-butadiene rubber containing approximately 45 percent by weight of styrene based on the total polymer weight, 5 percent by weight of 1,2 vinyl based on the total polymer weight, and 9 percent by weight of 1,2 vinyl based on total butadiene units; functionalized with alkoxysilane and thiol groups, a developmental functionalized SBR obtained from Dow Olefinverbund GmbH which is of the type of silane/thiol functionalized SBR described in WO-A- 2007/047943. ⁴ Medium styrene content solution polymerized styrene-butadiene rubber containing approximately 21 percent by weight of styrene based on the total polymer weight, 50 percent by weight of 1,2 vinyl based on the total polymer weight, and 63 percent by weight of 1,2 vinyl based on the total butadiene units; functionalized with alkoxysilane and thiol groups, a developmental functionalized SBR obtained from Dow Olefinverbund GmbH which is of the type of silane/thiol functionalized SBR described in W02007/047943. | | | | |

**Table 8**

| Physical Properties | | | | |
|---|---|---|---|---|
| Rebound 0°C | 7.1 | 10.4 | 9.0 | 7.6 |
| Rebound 23°C | 19.8 | 24.5 | 22.4 | 24.8 |
| Rebound 100°C | 52.5 | 51.4 | 50.3 | 54.5 |
| Shore A | 68 | 71 | 71 | 64 |
| Mooney Viscosity | 45 | 52 | 43 | 46 |
| | | | | |

| RPA¹ | | | | |
|---|---|---|---|---|
| G' 15% (0.83 Hz) uncured | 0.32 | 0.40 | 0.28 | 0.28 |
| G'1 % | 3.2 | 4.5 | 4.0 | 2.7 |
| G' 50 % | 0.87 | 0.94 | 0.98 | 0.88 |
| G" 10 % | 0.28 | 0.39 | 0.36 | 0.23 |
| Tan Delta 10 % | 0.154 | 0.176 | 0.170 | 0.141 |
| | | | | |

| DIN Abrasion² 14 mins @160°C | | | | |
|---|---|---|---|---|
| Abrasion loss, mm³ | 171 | 151 | 133 | 162 |
| | | | | |

| Cold Tensile³ | | | | |
|---|---|---|---|---|
| Elongation at break, % | 419 | 533 | 495 | 438 |
| True Tensile, MPa | 84 | 135 | 116 | 92 |
| Mod 100%, MPa | 2.3 | 2.3 | 2.5 | 2.2 |
| Mod 300%, MPa | 10.3 | 10.3 | 10.9 | 10.2 |
| Tensile Strength, MPa | 16.1 | 21.3 | 19.6 | 17.1 |
| | | | | |

| Viscoelastic Strain⁴ | | | | |
|---|---|---|---|---|
| G' (1% 50°C) MPA | 4.0 | 7.2 | 6.1 | 2.5 |
| Tan delta (1.5%, 50°C) | 0.23 | 0.232 | 0.213 | 0.177 |
| Tan delta (1.5% 0°C) | 0.669 | 0.477 | 0.55 | 0.638 |
| Tan delta (3%, 0ºC) | 0.779 | 0.587 | 0.687 | 0.703 |

| | | | | |
|---|---|---|---|---|
| ¹The samples were tested for viscoelastic properties using RPA. "RPA" refers to a Rubber Process Analyzer as RPA 2000.TM. instrument by Alpha Technologies, formerly the Flexsys Company and formerly the Monsanto Company. References to an RPA 2000 instrument may be found in the following publications: H. A. Palowski, et al, Rubber World, June 1992 and January 1997, as well as Rubber & Plastics News, Apr. 26 and May 10, 1993. ²DIN abrasion (in terms of relative volume loss compared to a control) according to DIN 53516. ³Cold tensile properties of the cured compounds were measured following DIN 53504 at a test temperature of 23ºC. ⁴Viscoelastic properties were measured using a Metravib strain sweep viscoanalyzer using a test temperature of 30ºC and a frequency of 7.8 Hz. | | | | |

As seen in Tables 2, 4, 6 and 8, the Samples made using the high styrene, functionalized SBR show an improvement in abrasion behavior at high SBR content, as compared with the other SBR types. In particular, Samples 3, 7, 11 and 15 utilizing the high styrene, functionalized SBR show an unexpectedly and surprisingly high abrasion resistance at styrene butadiene rubber/polybutadiene rubber ratios (SBR/BR) of 70/30 and 90/10. The significant improvement in abrasion resistance with the high styrene, functionalized SBR as compared with the other SBR is illustrated in Table 9. In Table 9, a wear index is utilized to compare the abrasion results of Tables 2, 4, 6 and 8, where the wear index is defined as the measured abrasion for the sample divided by the abrasion measured at SBR/BR ratio of 50/50. A lower wear index is indicative of better abrasion resistance.

**Table 9 Abrasion Index Comparison for Different SBR types at Various SBR/BR Ratios**

| SBR/BR | Silica, phr | | SBR type | | |
|---|---|---|---|---|---|
| | | m-u | h-u | h-f | m-f |
| | | | | | |
| 50/50 | 90 | 1 | 1 | 1 | 1 |
| 70/30 | 90 | 1.28 | 1.26 | 1.17 | 1.23 |
| 90/10 | 90 | 1.56 | 1.49 | 1.38 | 1.51 |
| 90/10 | 120 | 2.14 | 2.10 | 1.93 | 2.31 |

| | | | | | |
|---|---|---|---|---|---|
| m-u: medium styrene-unfunctionalized SBR (Samples 1, 5, 9 and 13) h-u: high styrene-unfunctionalized SBR (Samples 2, 6, 10, and 14) h-f: high styrene-functionalized SBR (Samples 3, 7, 11, and 15) m-f: medium styrene-functionalized SBR (Samples 4, 8, 12, and 16) | | | | | |

As is apparent to one skilled in the art, rubber compounds containing styrene-butadiene rubber and polybutadiene typically show reduced abrasion resistance as the amount of polybutadiene is reduced. This is shown in Table 9 for all SBR types. In particular, both the high styrene unfunctionalized (h-u) SBR and medium styrene unfunctionalized (m-u) SBR compounds showed essentially identical deterioration in abrasion resistance as the polybutadiene content was reduced. Likewise, the medium styrene, functionalized (m-f) SBR compounds showed a deterioration in abrasion resistance similar to the unfunctionalized SBR- containing compounds. However, the high styrene, functionalized (h-f) SBR- containing compounds showed a significantly superior retention of abrasion resistance as the polybutadiene content was reduced. This behavior showing superior retention of abrasion resistance by the samples containing high styrene, functionalized SBR is surprising and unexpected: while the effect of the medium styrene functionalized SBR on retention of abrasion resistance was essentially the same as for both of the unfunctionalized SBR, the high styrene functionalized SBR was significantly superior in retaining abrasion resistance as compared with the unfunctionalized SBR.

## Claims

1. A pneumatic tire comprising a ground contacting tread, the tread comprising a rubber composition comprising from 60 to 90 phr of a functionalized solution polymerized styrene-butadiene rubber having a bound styrene content of at least 36 percent by weight, a vinyl 1,2 content of less than 25 percent by weight, and functionalized with an alkoxysilane group and a thiol group, from 40 to 10 phr of a polybutadiene, and from 50 to 150 phr of silica.

2. The pneumatic tire of claim 1 wherein the solution polymerized styrene-butadiene rubber is functionalized with an alkoxysilane group and a thiol and comprises the reaction product of a living anionic polymer and a silane-sulfide modifier represented by the formula
(R⁴O)ₓR⁴_{y}Si-R⁵-S-SiR⁴₃
wherein Si is silicon; S is sulfur; O is oxygen; x is an integer selected from 1, 2 and 3; y is an integer selected from 0, 1, and 2; x+y=3; R⁴ is the same or different and selected from the group consisting of alkyls with from 1 to 16 carbon atoms; and R⁵ is an aryl, an alkyl aryl, or is selected from the group consisting of alkyls with from 1 to 16 carbon atoms.

3. The pneumatic tire of claim 2 wherein R⁵ is selected from the group consisting of alkyls with from 1 to 16 carbon atoms.

4. The pneumatic tire of claim 2 wherein each R⁴ group is the same or different and each is independently selected from the group consisting of alkyls with from 1 to 5 carbon atoms, and R⁵ is selected from the group consisting of alkyls with from 1 to 5 carbon atoms.

5. The pneumatic tire of at least one of the previous claims wherein the solution polymerized styrene-butadiene rubber has a bound styrene content of at least 40 percent by weight.

6. The pneumatic tire of at least one of the previous claims wherein the amount of the functionalized solution polymerized styrene-butadiene rubber ranges from 70 to 80 phr.

7. The pneumatic tire of at least one of the previous claims wherein the amount of polybutadiene ranges from 20 to 10 phr.

8. The pneumatic tire of at least one of the previous claims wherein the amount of silica ranges from 60 to 120 phr.

9. The pneumatic tire of at least one of the previous claims wherein the polybutadiene is a high-cis polybutadiene having at least 90 percent cis-1,4 content.

10. The pneumatic tire of at least one of the previous claims wherein the tread comprises a tread cap and a tread base and wherein the rubber composition is used in the tread base.

11. The pneumatic tire of at least one of the previous claims wherein the tread comprises a tread cap and a tread base and wherein the rubber composition is used in the tread cap.

12. The pneumatic tire of at least one of the previous claims wherein the tread comprises a tread cap and a tread base and wherein the rubber composition is used only in the tread cap of the tire.
